# EUROPÄISCHE PATENTSCHRIFT

(11) **EP 2 564 681 B1**
(45) Veröffentlichungstag und Bekanntmachung des Hinweises auf die Patenterteilung: **04.06.2014**
(21) Anmeldenummer: 12401173.5
(22) Anmeldetag: 23.08.2012
(51) Int. Cl.: A01C 7/04, A01C 7/06

(54) **Pneumatische Einzelkornsämaschine**
Pneumatic single grain seeder
Semoir monograine pneumatique

(30) Priorität: 01.09.2011 DE 102011053189
(43) Veröffentlichungstag der Anmeldung: 06.03.2013
(73) Patentinhaber: Amazonen-Werke H. Dreyer GmbH & Co. KG, 49205 Hasbergen (DE)
(72) Erfinder: Mertens, Daniel, 26135 Oldenburg (DE)

(56) Entgegenhaltungen:
- EP-A1- 2 298 056
- DE-A1-102008 037 782
- US-A- 4 296 695
- US-A- 4 356 934

## Beschreibung

Die Erfindung betrifft einen pneumatische Einzelkornsämaschinen gemäß des Oberbegriffes des Patentanspruches 1.

Eine derartige pneumatische Einzelkornsämaschine ist in der DE 10 2008 037 782 bekannt. Das Vereinzelungsorgan dieser Einzelkornsämaschine wird über eine an einem Gebläse angeschlossene Luftleitung mit einem Druckluftstrom zur Erzeugung einer Druckdifferenz an dem als Vereinzelungstrommel ausgebildeten Vereinzelungsorgan beaufschlagt. Der Einzelkornsämaschine ist eine als pneumatischer Mikrogranulatstreuer ausgebildete Verteilvorrichtung zugeordnet. Dieser Verteilvorrichtung ist an eine an einem eigenen Gebläse angeschlossene Luftdruckzuleitung zugeordnet. Somit sind der Einzelkornsämaschine und der zugeordneten zusätzlichen Verteilvorrichtung jeweils separate Gebläse zugeordnet. Dieses ist relativ aufwändig.

Der Erfindung liegt die Aufgabe zu Grunde, eine einfachere Druckluftbeaufschlagung der Einzelkornsämaschine und den zugeordneten Komponenten vorzuschlagen.

Diese Aufgabe der erfindungsgemäß dadurch gelöst, dass die Luftdruckzuleitung für die Verteilvorrichtung mit einem Verbindungsanschluss an den Überdruckbereich des Gehäuses der Einzelkornsämaschine in deren Vereinzelungsbereich angeschlossen ist.

Infolge dieser Maßnahme wird die Luftdruckzuleitung nicht an ein eigenes Gebläse, sondern an einen bereits an der Maschine vorhandenen Überdruckbereich der Einzelkornsämaschine, der von einem Gebläse beaufschlagt wird, angeschlossen.

Dieser Anschluss der wird in einfacher Weise dadurch realisiert, dass das Gehäuse eine Öffnung aufweist, dass an dieser Öffnung der Verbindungsanschluss für die Luftdruckzuleitung der Verteilvorrichtung angeschlossen ist

In besonders einfacher Weise ist diese Anordnung dadurch zu realisieren, dass der Verbindungsanschluss im oberen Bereich des Gehäuses und/oder des Vereinzelungsbereiches der Trommel an das Gehäuse angeschlossen ist.

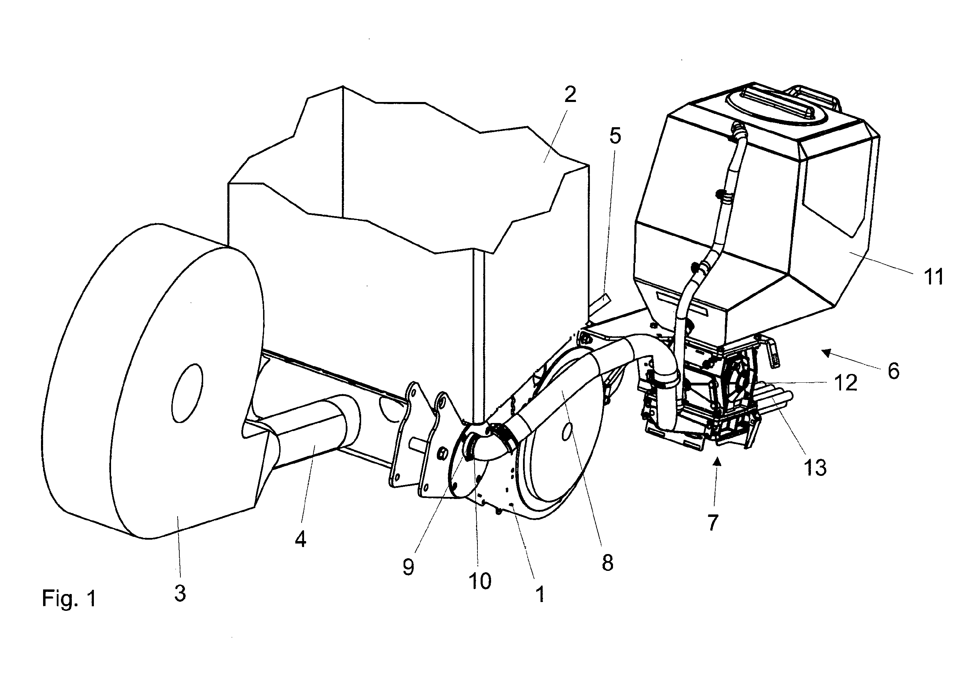

Weitere Einzelheiten der Erfindung sind der Beispielsbeschreibung und der Zeichnung zu entnehmen. Die Zeichnung zeigt
einen Teil der Einzelkornsämaschine mit der als Mikrogranulatstreuer ausgebildten zugeordneten zusätzlichen Verteilmaschine mit dem pneumatischen Dosierer in perspektivischer Darstellung.

Die pneumatische Einzelkornsämaschine weist das Vereinzelungsgehäuse 1 mit einer darin drehbar gelagerten und angetriebenen Vereinzelungstrommel, auf. Über eine nicht dargestellte Antriebsvorrichtung wird die Vereinzelungstrommel in Rotation versetzt. Oberhalb der Vereinzelungstrommel ist ein Vorratsbehälter angeordnet. In den Umfangsmantel der Vereinzelungstrommel sind kreisförmig in Perforationsreihen angeordnete Perforationen angebracht. Der Vorratsbehälter 2 und das Vereinzelungsgehäuse 1 werden auf der Vereinzelungsseite der Trommel mit einem Überdruck durch die an das Gebläse 3 angeschlossene Luftzuführleitung 4 beaufschlagt. Somit entsteht eine Druckdifferenz zwischen dem Innenraum der Vereinzelungstrommel und dem Außenbereich der Vereinzelungstrommel in deren Vereinzelungsbereich. Wenn die Vereinzelungstrommel durch den Saatgutvorrat, der sich zumindest in dem unteren Bereich der Vereinzelungstrommel in dem Vereinzelungsgehäuse 1 befindet, geführt wird, lagern sich an der Perforationen auf der Außenseite der perforierten Trommel Samenkörner an.

Weiterhin weist die Einzelkornsämaschine bis an die Trommeloberfläche der Trommel heranreichende, mit Einmündungsöffnungen versehene Ausbringleitungen 5 auf, welche zu Ausbringelementen, wie beispielsweise Säscharen, führen. Mittels dieser Ausbringleitungen 5 sind die von der Vereinzelungstrommel vereinzelten Saatkörner den Ausbringelementen mittels eines Luftstromes über die Ausbringleitungen 5 zuführbar.

Der Einzelkornsämaschine weist die zusätzliche Verteilvorrichtung 6 zum Verteilen eines weiteren Materiales mit der pneumatischen Fördereinrichtung 7, die im Ausführungsbeispiel als Mikrogranulatstreuer ausgebildet ist auf. Die pneumatische Fördereinrichtung 7 weist eine Luftdruckzuleitung 8 auf.

Das Vereinzelungsgehäuse 1 weist in dessen Überdruckbereich eine Öffnung 9 auf. An dieser Öffnung 8 ist der Verbindungsanschluss 10 für die Luftdruckzuleitung 8 der zusätzlichen Verteilvorrichtung 6 angeschlossen. Hierbei ist der Verbindungsanschluss 10 im oberen Bereich des Vereinzelungsgehäuses 1 und somit des Vereinzelungsbereiches der Trommel an das Gehäuse 1 der Einzelkornsämaschine angeschlossen. Somit ist die Luftdruckzuleitung 8 für die zusätzliche Verteilvorrichtung 6 mit dem Verbindungsanschluss 10 an den Überdruckbereich des Gehäuses 1 der Einzelkornsämaschine in deren Vereinzelungsbereich angeschlossen.

Die als Mikrogranulatstreuer 6 ausgebildete zusätzliche Verteilvorrichtung weist weiterhin dem pneumatischen Dosierer 7 auf. Der pneumatische Dosierer 7 ist 11 unterhalb der Auslassöffnung eines Vorratsbehälters 11, der zur Aufnahme von auszubringenden landwirtschaftlichen Materialien bestimmt ist, angeordnet. Der Vorratsbehälter 11 ist an dem Rahmen der Einzelkornsämaschine in geeigneter Weise befestigt. Der Dosierer 7 weist ein Dosiergehäuse 12 auf. In dem Dosiergehäuse 12 ist eine nicht dargestellte in regelbarer Weise antreibbare Dosierwalze gelagert. In dem Dosiergehäuse 12 sind Materialeinleitvorrichtungen angeordnet. Diesen Materialleiteinrichtungen wird von der Dosierwalze in einstellbaren Mengen das sich im Vorratsbehälter 11 befindliche landwirtschaftliche Material zugeleitet. Auf der einen Seite sind dem Dosiergehäuse 12 Lufteinlassöffnungen, die mit dem Materialleiteinrichtungen verbunden sind, und auf der anderen Seite sind dem Dosiergehäuse 12 Abgangsöffnungen, an welche zu Ausbringorganen führende Materialleitungen 13 anschließbar sind, zugeordnet.

## Patentansprüche

1. Pneumatische Einzelkornsämaschine mit einem einen Saatgutvorratsbehälter (2) aufweisenden Gehäuse (1) und zumindest einer drehbar angetriebenen Vereinzelungstrommel, in deren Umfangsmantel kreisförmig in Perforationsreihen angeordnete Perforationen angebracht sind, einem Gebläse (3), mittels welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen auf der Außenseite der perforierten Trommel Samenkörner anlagern, wobei das Gehäuse (1) zwei voneinander beabstandete Seitenwände aufweist, die sich parallel zur Bewegungsrichtung der Trommel erstrecken und mit der Trommel zumindest annähernd abdichtend zusammenwirken, wobei die Luftzuleitung (4) von dem Gebläse (3) in das Gehäuse (1) einmündet und in dem Bereich zwischen den Wänden des Gehäuses (1) und der Vereinzelungstrommel in deren Vereinzelungsbereich einen Überdruck gegenüber dem Atmosphärendruck erzeugt, wobei der Einzelkornsämaschine eine zusätzliche Verteilvorrichtung (6) zum Verteilen eines weiteren Materiales mit einer pneumatische Fördereinrichtung (7) mit zumindest einer mit einer Druckerzeugungseinrichtung verbundenen Luftdruckzuleitung (8) zugeordnet ist, insbesondere ein Mikrogranulatstreuer, **dadurch gekennzeichnet, dass** die Luftdruckzuleitung (8) für die zusätzliche Verteilvorrichtung (6) mit einem Verbindungsanschluss (10) an den Überdruckbereich des Gehäuses (1) der Einzelkornsämaschine in deren Vereinzelungsbereich angeschlossen ist.

2. Einzelkornsämaschine nach Anspruch 1, **dadurch gekennzeichnet, dass** das Gehäuse (1) eine Öffnung (9) aufweist, dass an dieser Öffnung (9) der Verbindungsanschluss (10) für die Luftdruckzuleitung (8) der Verteilvorrichtung (6) angeschlossen ist

3. Einzelkornsämaschine nach einem oder mehreren der vorstehenden Ansprüche **dadurch gekennzeichnet, dass** der Verbindungsanschluss (10) im oberen Bereich des Gehäuses (1) und/oder des Vereinzelungsbereiches der Trommel an das Gehäuse (1) angeschlossen ist.

## Claims

1. Pneumatic single grain seeder having a housing (1) having a seed storage container (2), and at least one rotatably driven singulating drum, in the circumferential lateral surface of which there are provided perforations arranged in rows of perforations in a circular manner, a fan (3), by means of which a pressure difference between the interior of the singulating drum and the exterior region of the singulating drum can be produced, such that, when the singulating drum is guided through the seed store, grains are taken up at the perforations on the outer side of the perforated drum, wherein the housing (1) has two spaced-apart side walls which extend parallel to the direction of movement of the drum and interact with the drum in an at least approximately sealing manner, wherein the air feed line (4) from the fan (3) leads into the housing (1) and, in the region between the walls of the housing (1) and the singulating drum, produces, in the singulating region thereof, a positive pressure in relation to the atmospheric pressure, wherein the single grain seeder is assigned an additional distributing device (6) for distributing a further material with a pneumatic conveying device (7) having at least one air pressure feed line (8) connected to a pressure-generating device, in particular a micro granule spreader, **characterized in that** the air pressure feed line (8) for the additional distributing device (6) is connected by a coupling connection (10) to the positive pressure region of the housing (1) of the single grain seeder in the singulating region thereof.

2. Single grain seeder according to Claim 1, **characterized in that** the housing (1) has an opening (9), **in that** the coupling connection (10) for the air pressure feed line (8) of the distributing device (6) is connected to said opening (9).

3. Single grain seeder according to one or more of the preceding claims, **characterized in that** the coupling connection (10) is connected to the housing (1) in the upper region of the housing (1) and/or of the singulating region of the drum.

## Revendications

1. Semoir monograine pneumatique comprenant un boîtier (1) présentant un réservoir de semences (2) et au moins un tambour de séparation entraîné en rotation, dans l'enveloppe périphérique duquel sont pratiquées des perforations disposées en rangées de perforations circulaires, une soufflante (3), au moyen de laquelle une différence de pression entre l'espace interne du tambour de séparation et la région extérieure du tambour de séparation peut être produite, de telle sorte que lorsque le tambour de séparation est guidé à travers le réservoir de semences, des grains de semences s'accumulent au niveau des perforations sur le côté extérieur du tambour perforé, le boîtier (1) présentant deux parois latérales espacées l'une de l'autre qui s'étendent parallèlement à la direction de déplacement du tambour et qui coopèrent avec le tambour de manière au moins approximativement hermétique, la conduite d'alimentation en air (4) débouchant depuis la soufflante (3) dans le boîtier (1) et produisant dans la région entre les parois du boîtier (1) et le tambour de séparation, dans sa région de séparation, une surpression par rapport à la pression atmosphérique, le semoir monograine étant associé à un dispositif de distribution supplémentaire (6) pour distribuer un matériau supplémentaire avec un dispositif de transport pneumatique (7) avec au moins une conduite d'alimentation en air comprimé (8) associée à un dispositif de génération de pression, en particulier un microgranulateur, **caractérisé en ce que** la conduite d'alimentation en air comprimé (8) pour le dispositif de distribution supplémentaire (6) est raccordée à un raccord de connexion (10) au niveau de la région de surpression du boîtier (1) du semoir monograine dans sa région de séparation.

2. Semoir monograine selon la revendication 1, **caractérisé en ce que** le boîtier (1) présente une ouverture (9), **en ce qu'**au niveau de cette ouverture (9) est raccordé le raccord de connexion (10) pour la conduite d'alimentation en air comprimé (8) du dispositif de distribution (6).

3. Semoir monograine selon l'une quelconque ou plusieurs des revendications précédentes, **caractérisé en ce que** le raccord de connexion (10) est raccordé au boîtier (1) dans la région supérieure du boîtier (1) et/ou de la région de séparation du tambour.
